# EUROPEAN PATENT APPLICATION

(11) **EP 1 803 639 A2**
(43) Date of publication of application: **04.07.2007**
(21) Application number: 06126399.2
(22) Date of filing: 18.12.2006
(51) Int. Cl.: B62M 3/08

(54) **Bicycle pedal**

(30) Priority: 31.12.2005 GB 0526630
(71) Applicant: Poyzer, Michael, Carlton Nottingham Nottinghamshire NG4 1PX (GB)
(72) Inventor: Poyzer, Michael, Carlton Nottingham Nottinghamshire NG4 1PX (GB)

(57) **Abstract**

A bicycle pedal assembly, one of a matching pair, with a rotating body around a centre axis, which has a top and bottom surface, one or both of which are provided with a means of shock absorption, such that the surface in question moves in a controlled and decelerating manner in the direction of the pressure applied by the riders foot, returning to the rest position when the pressure is released. Figure 1 to accompany abstract.

## Description

### Field of the Invention

This invention is concerned with the provision of drive pedals on cycles and particularly but not exclusively, with the provision of drive pedals on manually operated bicycles, unicycles, tricycles and tandems. The invention provides a novel shock absorbing system on the cycle which operates within the pedals.

### Background to the Invention

Bicycles, tricycles, unicycles and tandems are conventionally provided with a pair of drive pedals (hereinafter any reference to a pair of pedals will be taken to mean two pairs of pedals in the case of a tandem) mounted diametrically opposite each other, onto the ends of a pair of cranks installed on a rotating axle which drive, directly (in the case of a unicycle) or through a drive mechanism with or without gearing (in the case of bicycles, tricycles and tandems) the propulsion wheel of the vehicle to give it forward (or backward) motion. When such vehicles are used on paved or smooth surfaces with few obstructions, this system works well with relative comfort. With the advent of off road cycling and more particularly with the development of extreme cycle sports (BMX, Bicycle Trials, Downhill racing) cycles spend a lot more time with one or both wheels out of contact with the ground. The effects of gravity mean that when those wheels return to the ground, they do so with greatly variable forces and the shock loadings on the pedals can be considerable. Suspension forks and frames have been developed over the years which attempt to tackle this problem with greatly variable results. It is alternatively an object of this invention to provide a degree of shock absorption within the pedals themselves. They can be used in combination with existing front and rear bicycle suspension or more particularly on cycles where no other type of suspension is normally used or even more particularly in the case of unicycles where the only variable suspension normally available is the size and degree of inflation of the tyres. It is also alternatively an object of this invention to reduce the shockloading on the pedal axles, cranks and crank axle and thus reduce the risk of any of those parts failing during usage and potentially causing accidents.

It is also alternatively an object of this invention to reduce the shock loading of the pedal and in turn reduce the shock loading on the feet, ankles, knees etc. of the rider and. thus reduce the risk of possible physiological damage to all these and more body parts.

### Summary of the Invention

According to the invention a cycle is provided with a pair of pedal assemblies each of which comprises of a pedal shaft having a first end adapted to be coupled to the end of a rotating crank and a second end, with a centre rotation axis extending between said first and second ends. A pedal body made of one or more pieces is rotatably coupled to said. rotation axis forming an identical top and bottom surface, on either of which the riders feet rest. Both of these surfaces are joined in such a way that the front and rear of each surface move equally in the direction of a centre line which passes through the centre of the rotation axis parallel to the top and bottom surfaces when pressure is applied to either surface. A shock aborbing device or mechanism incorporated into the body of the pedal activates a gradual deceleration of that movement up to or close up to a fixed stop and when the pressure is released the surfaces return to their rest position. The movement of the front and rear top surface of the pedal may be in a directly perpendicular motion to the centre line of the axis parallel to the top and bottom surfaces or the front and rear may move in two diametrically opposing arcs of a circle whose midpoint is in the centre of the rotation axis.

In its simplest form the pedal will have a top and bottom surface which is spring loaded beneath those surfaces to allow a degree of damped up and down float in those surfaces. From this simple and basic structure there then follows many more aspects of the invention with much greater degrees of mechanical complexity and with many ways of producing this end result but with much greater variance of control over the degree of damping and the defined characteristics of the travel on the pedal. The shock absorption can use conventional springs with all the variable characteristics which can be built in to their construction or alternatively can be supplied by polymeric elastomers with very variable molecular structures created to perform in many different ways. The invention will now be described solely by way of example and with reference to the accompanying drawings.

### Brief description of the drawings.

The accompanying drawings are Figure 1 a line diagram incorporating the most basic embodiment of the invention and Figures 2 to 12 are various views of a specific and much more complex embodiment of the invention.
Figure 1. is an isometric line drawing of the most basic embodiment of the invention. showing a pedal with its axle.
Figure 2 is an isometric line diagram of the two main pieces of the pedal body shown in their interlocking position.
Figure 3 is an isometric line diagram of the assembled pedal, sectioned down the centre of the pedal axle to show the configuration of the axle, bearings, spacers and two main body pieces,
Figure 4 is an end elevation of the pedal showing the inter relationship of the two main body pieces and their inter connection with the pedal axle and the two suspension elastomers.
Figure 5 is an end elevation of part A in figure 3
Figure 6 is a plan view of part A in figure 3
Figure 7 is an end elevation of part B in figure 3
Figure 8 is a plan view of part B in figure 3
Figure 9 is a side elevation, the first of four computer aided design 3D images produced to show the pedal as it would appear as a manufactured item.
Figure 10 is an end elevation as per figure 9.
Figure 11 is a plan view as per figure 9.
Figure 12 is an isometric view as per figure 9
Please note, figures 9 to 12 do incorporate perspective.

### Detailed description of the drawings.

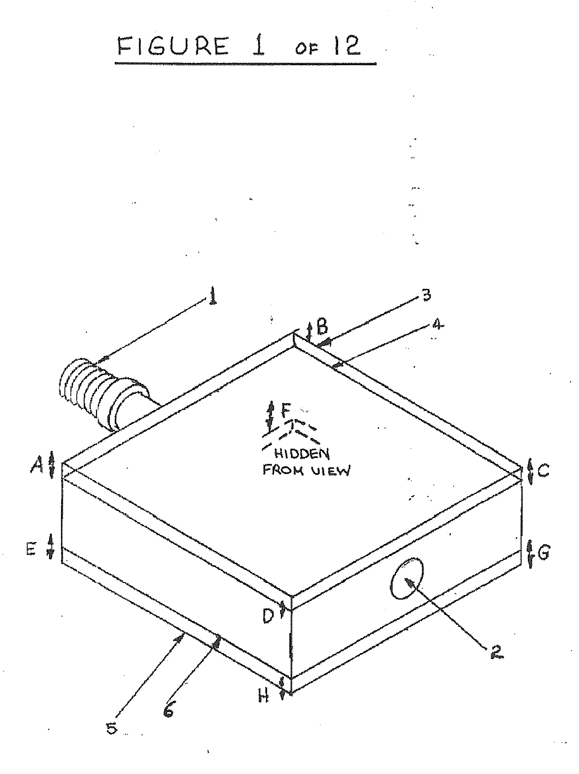

Figure 1 depicts a very simplified embodiment of the basic principles of the invention. Item 1 on the drawing is the threaded end of the pedal axle which screws into the threaded hole in the bicycle crank. Item 2 is the other end of the pedal axle where some form of locking device ie. nut and locknut, holds the assembled pedal together. The rectangular box shaped body of the pedal is held in place on the axle and is allowed to rotate in either direction by sitting on paired cups and cones running on ball bearings. Planes 3 and 5 are the normal rest positions of the rotatable top and bottom surfaces of the pedal. This top surface plane is spring loaded from beneath and when pressure is applied via the riders foot on either side, the top surface plane travels equally in the direction of arrows A to D or E to H. with a gradual deceleration to the position of either 4 or 6. When the pressure is decreased or removed those planes return to their rest positions 3 and 5.

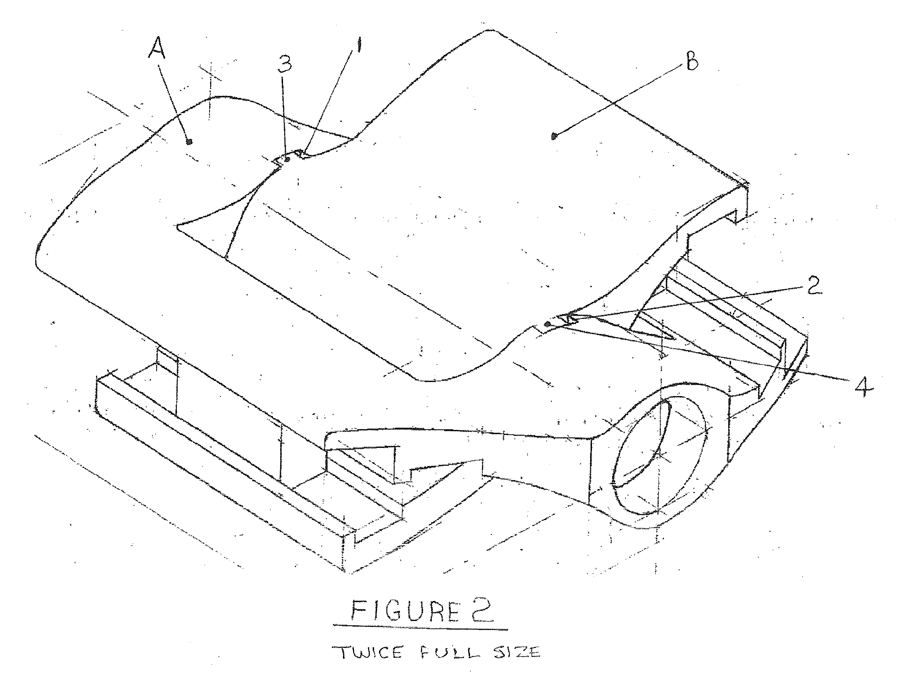

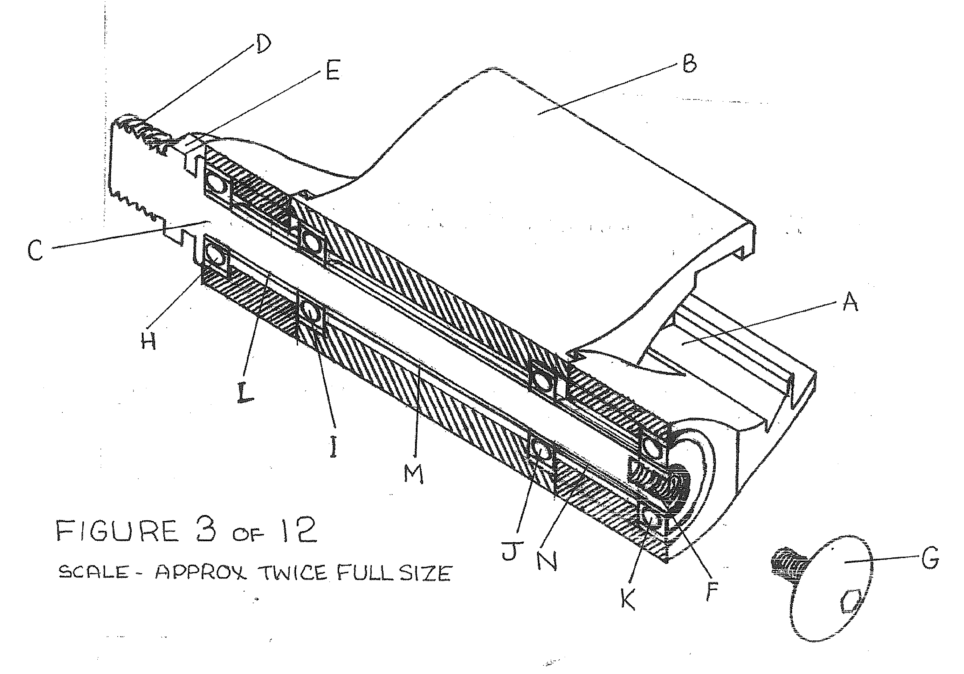

Figure 2 is the first of a series of drawings which depict a detailed and precise account of the construction of a much more complex embodiment of the invention. This figure depicts the two main components of the body structure in this embodiment and also the way that they interlock together. They are referred to as part A and part B. Part A is the major and larger part and is formed in such a way that it passes through the centre line of the axle and is identical back and front although reversed top to bottom. This design means that whenever it rotates about the centre axis the top surface of part A is always at the front of the pedal. Part B is smaller and fits inside Part A also passing through the centre axle and identical back and front although reversed top to bottom but angled diametrically opposite to part A so that whichever way it rotates on the axle the top surface of part B is always at the rear of the pedal. Both parts are machined out to accept two pressed in industrial sealed bearings which in turn press onto the axle all as depicted and more fully explained in figure 3. Such construction allows both part A and part B to rotate independantly about the pedal axle. The requirements of the design mean that the movement about the axle of parts A and B needs to be restricted to a fixed maximum and minimum number of degrees of rotation relative to each other, in this particular embodiment, no more than 10 degrees of rotational movement relative to one another. To facilitate this restriction of movement part A has two quadrant grooves machined Into both internal faces from the top surface to the axle hole as shown by numbers 1 and 2 and part B has two quadrant spigots machined to protrude out from its two outer surfaces from the top surface to the axle hole as shown by numbers 3 and 4. The quadrant grooves in part A are 40 degrees of a circle arc and the quadrant spigots in part B are 30 degrees of a circle arc so 10 degrees of movement are allowed before the spigot encounters the groove stop on either side.

Figure 3 is an isometric diagram as figure 2 but of the fully assembled pedal and cm in half centrally down the centre axle vertically. This shows C the pedal axle with a threaded portion D which screws into the crank, a slightly larger diameter E with machined flats to facilitate a spanner for screwing it into the crank followed by a groove and then a raised machined portion against which the bearing presses. The axle passes right through the pedal assembly and has a threaded hole F in the end into which the final locking bolt G locates. H is the first bearing pressed into part A and a tubular spacing sleeve L passes over the axle to space it from bearing I which is pressed into part B followed by another tubular spacing sleeve M between that and bearing J pressed into the other side of part B. This is followed by another tubular sleeve N spacing it from bearing K pressed into the outside of part A. This shows how the whole assembly is free to rotate about the axle and part A and part B are allowed to rotate freely within the constraints of the spigot / groove system described in figure 2.

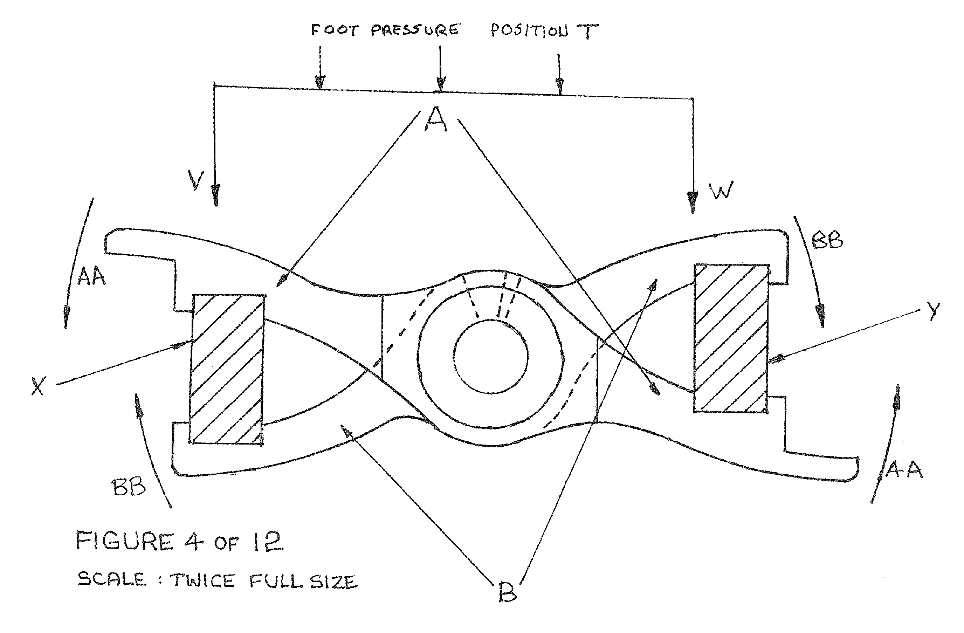

Figure 4 is an end elevation of the assembled pedal. This clearly shows part A and part B fitted into their interlocking position about the pedal axle. Letters X and Y on this drawing are rectangular blocks of polymeric elastomer which fit down the machined grooves formed on the underside of the top surfaces of both parts A and B. These are held in position by screws drilled and tapped through from the top surfaces. These hard elastomers thus hold the two parts of the pedal in their rest position. When foot pressure is brought to bear in position T and bears down on the front and rear of the pedal V and W, part A of the pedal moves in an arc about the centre of the axle as shown by arrows AA and part B of the pedal moves in an arc the opposite way to part A in the direction of arrows BB. This puts pressure on the elastomers which deform by bulging sideways to absorb the pressure and as the molecular structure gets denser so the required pressure to deform it increases exponentially resulting in a decelerating action. The maximum movement is defined by the spigot / groove quadrant mechanism to 10 degrees of arc. When the pressure is released the elastomers resume their normal shape and the pedal surfaces return to their rest position.

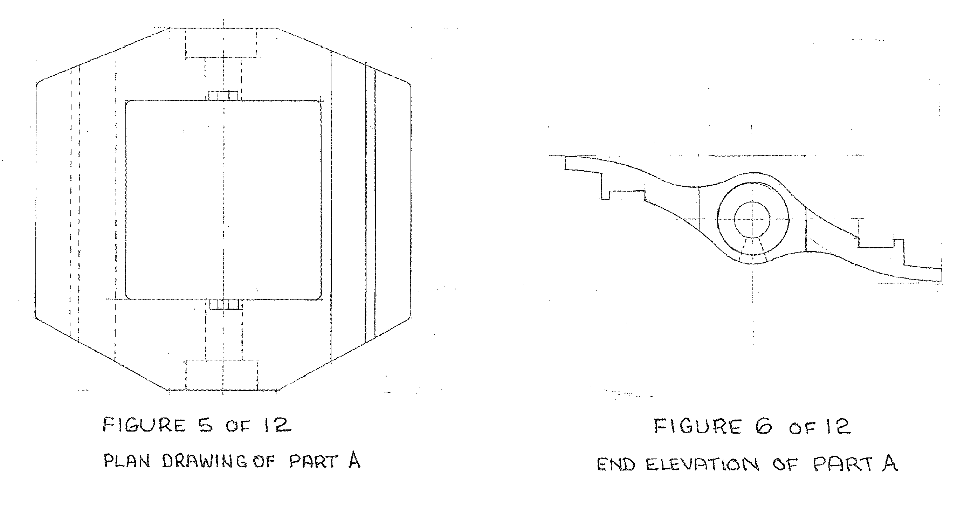

Figures 5 and 6 are more detailed drawings of the individual part A of the main pedal body.

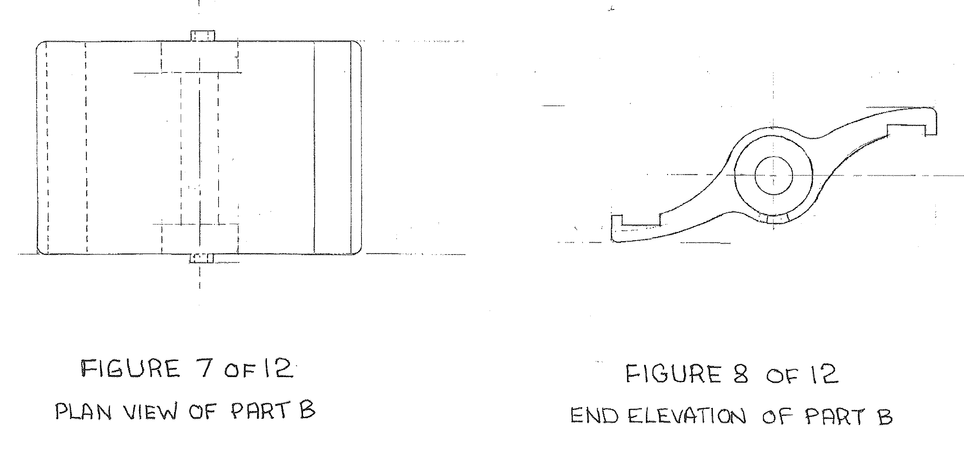

Figures 7 and 8 are more detailed drawings of the individual part B of the main pedal body.

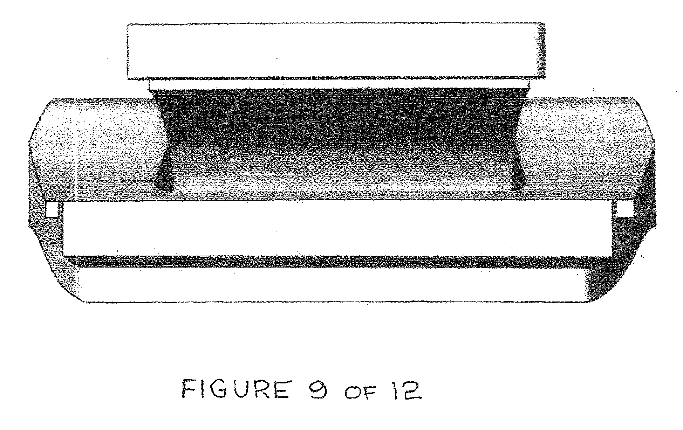

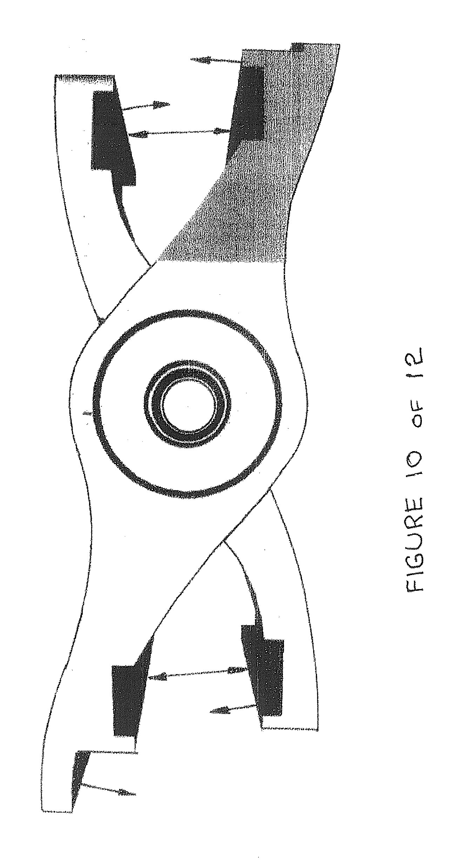

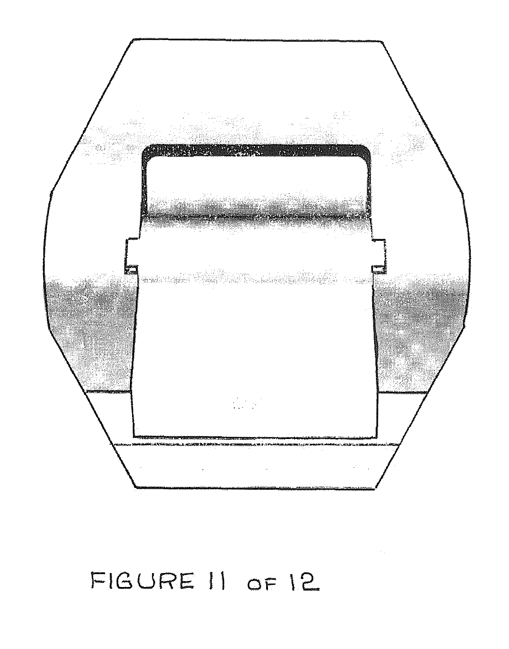

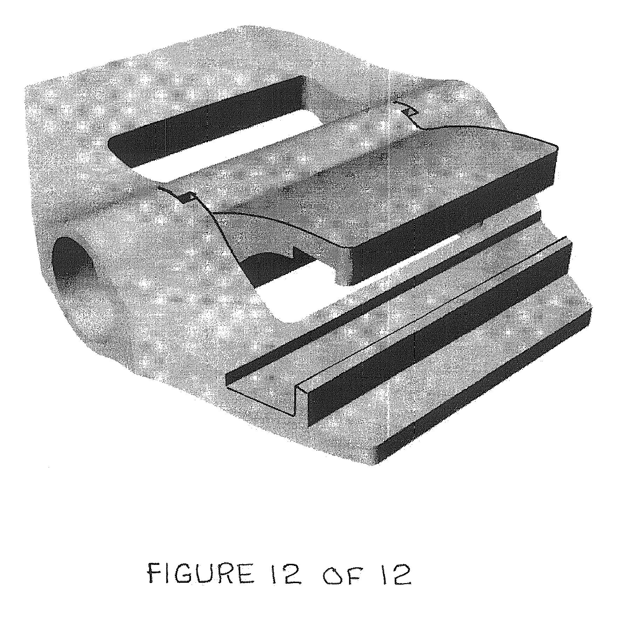

Figures 9, 10, 11 and 12 are computer generated images of the manufactured components assembled together to give greater clarity of visualisation of the invention.

## Claims

**1.** A bicycle pedal assembly which freely rotates about a central axis and has a top and bottom surface which may or may not be identical, in which both surfaces or just one surface absorb shock loading, utilising a controlled decelerating movement either independantly or with syncronous engagement.

**2.** A bicycle pedal assembly including a pedal axle with two ends, one of which is adapted to be coupled to the outer most end of a bicycle crank with a centre rotation axis between said ends and a pedal body made of two or more pieces rotatably coupled to said rotation axis, forming a top and bottom surface which may or may not be identical, both surfaces which are mechanically joined in such a way that either surface moves in the direction of a centre line which passes through the centre of the rotation axis, parallel to the top and bottom surfaces and when pressure is applied to either surface an inbuilt shock absorbing mechanism produces a gradual deceleration of that movement up to a maximum pre determined stop until the pressure is released and the surfaces return to their natural rest position.

**3.** A bicycle pedal assembly according to claim 2 where the pedal body is formed by two main pieces, the first piece which is an approximate square annular shape whose front end forms the top front surface of the pedal and which then curves down through and pivots about the central axis and whose rear end which is identical to front end but reversed then curves round to form the rear bottom surface of the pedal and the second piece which is a rectangular piece whose underside front surface forms the front bottom surface of the pedal and which then curves up and round passing simultaneously through the centre of the first piece and the centre axis about which it pivots and then curving round and up so that its identical but reversed rear end forms the top rear surface of the pedal, each part rotating independantly about the centre axis but within a maximum and minimum travel position one point of which forms its natural rest position, held in place by a shock absorbing mechanism which allows a gradual decelerating movement between the maximum and minimum points when pressure is applied to either surface of the pedal which then allows the pedal to return to its rest position when the pressure is removed.

**4.** A bicycle pedal according to claim 3 where the shock absorbing mechanism is formed with two blocks of polymeric elastomer fitted one between front top and bottom surfaces and one between rear top and bottom surfaces which both deform when compressed with a lateral bulge and an exponential pressure absorbing reduction in their height.

**5.** A bicycle pedal according to claim 3 where the shock absorbing mechanism is formed with a series of steel or other metal springs placed between the top and bottom from surfaces and top and bottom rear surfaces of the pedal which compress on the application of pressure to the top or bottom surfaces of the pedal and absorb the shock loading in the manner described.

**6.** A bicycle pedal according to claim 4 where elastomers with varying properties can be used and inter changed to vary the charactistics of the shock absorption when the mechanism is activated.

**7.** A bicycle pedal according to claim 5 where springs with variable operational profiles can be interchanged to alter the characteritics of the way in which the shock absorption is activated.

**8.** A bicycle pedal according to claim 3 where the shock absorption is realised using torsional springs along the rotational axis, of which one end is secured to the centre axle and the other ends of which are secured variously to the two main pieces of the pedal body.

**9.** A bicycle pedal according to claim 3 where the two main pieces which form the pedal body are manufactured by CNC machining, forging or casting using Aluminium alloys or other metals for instance Titanium, Magnesium or Cromoly Steel.

**10.** A bicycle pedal according to claim 3 where the two main body pieces are made from thermo pastic mouldings.

**11.** A bicycle pedal according to all previous claims where a series of protruding flat topped pins of any height are secured to the top and bottom surface of the pedals by any means to assist in the friction grip on the pedal surface by the riders shoe.

**12.** A bicycle pedal according to claims 1 to 10 where a machined moulded or forged pattern is inlaid into the top and bottom surfaces opf the pedals to assist in frictional grip on the pedal by the riders shoes.
